**Europäisches Patentamt**

**European Patent Office**

**Office européen des brevets**

(11) Veröffentlichungsnummer: **0 187 789**
**B1**

(12) **EUROPÄISCHE PATENTSCHRIFT**

(45) Veröffentlichungstag der Patentschrift:
**16.08.89**

(51) Int. Cl.⁴: **H 04 N 9/455**

(21) Anmeldenummer: **85903259.1**

(22) Anmeldetag: **25.06.85**

(86) Internationale Anmeldenummer:
**PCT/EP 85/00307**

(87) Internationale Veröffentlichungsnummer:
**WO 86/00773 (30.01.86 Gazette 86/3)**

(54) SCHALTUNG ZUR SYNCHRONISIERUNG DES BEZUGSTRÄGEROSZILLATORS IN EINEM PAL-FARBFERNSEHEMPFÄNGER.

(30) Priorität: **12.07.84 DE 3425618**

(43) Veröffentlichungstag der Anmeldung:
**23.07.86 Patentblatt 86/30**

(45) Bekanntmachung des Hinweises auf die Patenterteilung:
**16.08.89 Patentblatt 89/33**

(84) Benannte Vertragsstaaten:
**AT BE CH DE FR GB IT LI LU NL SE**

(56) Entgegenhaltungen:
**DE-A- 1 812 760**
**FR-A- 2 556 545**
**US-A- 3 761 606**

(73) Patentinhaber: **Deutsche Thomson-Brandt GmbH, Hermann-Schwer-Strasse 3 Postfach 1307, D-7730 Villingen-Schwenningen (DE)**

(72) Erfinder: **RUFRAY, Jean-Claude, Hans-Thoma-Strasse 6, D-7734 Brigachtal (DE)**

## Beschreibung

In einem PAL-Farbfernsehempfänger werden bekanntlich in dem PAL-Laufzeitdecoder die Farbträger von zwei zeitlich aufeinanderfolgenden Zeilen in einer Addierstufe addiert und einer Subtrahierstufe subtrahiert. Dadurch wird der quadraturmodulierte Farbträger in zwei farbträgerfrequente Signale aufgespalten, die den beiden Modulationsachsen U und V entsprechen, von der eigentlichen Phasenmodulation des Farbträgers befreit und je mit einem der beiden Farbdifferenzsignale (B-Y) und (R-Y) mit unterdrücktem Träger in der Amplitude moduliert sind.

Die beiden farbträgerfrequenten Signale werden zwei Synchrondemodulatoren zugeführt, die an ihrem Ausgang die videofrequenten Farbsignale (B-Y) und (R-Y) liefern. Für die Synchrondemodulatoren wird dabei ein Bezugsträger mit der Farbträgerfrequenz und konstanter Phase benötigt. Dieser Bezugsträger wird bekanntlich in einer PLL-Phasenregelschaltung erzeugt, die von dem Farbsynchronsignal synchronisiert wird. Das Farbsynchronsignal wird nur während der hinteren Schwarzschulter übertragen, so dass während der überwiegenden Zeit einer Zeile keine Synchronisierinformation verfügbar und daher eine relativ hohe Zeitkonstante im Weg der Regelspannung der PLL-Schaltung erforderlich ist.

Für eine geringe Fangzeit des Oszillators muss die Zeitkonstante möglichst klein sein. Für eine geringe Phasenabweichung, das sogenannte phase-jitter, in Anwesenheit von Rauschen muss die Zeitkonstante indessen möglichst gross sein.

Es ist auch bekannt (DE-C 11 89 124), die beiden genannten farbträgerfrequenten Signale zusätzlich zur Synchronisierung des Bezugsträgeroszillators während der Zeilenhinlaufzeit auszunutzen. Dies ist möglich, weil diese Signale von der Phasenmodulation befreit sind. Wegen der Modulationsart mit unterdrücktem Träger kann sich jedoch die Phase zwischen 0° und 180° ändern. Deshalb ist es dort notwendig, die Signale von den 180°-Phasensprüngen zu befreien. Es ist dabei auch bekannt (DE-C 11 97 500), beide farbträgerfrequenten Signale auf gleiche Phase zu bringen und ihre Summe zur Synchronisierung des Bezugsträgeroszillators auszunutzen. Bei dieser bekannten Lösung steht also fast ununterbrochen eine Synchronisierinformation zur Verfügung, nämlich während der hinteren Schwarzschulter das Farbsynchronsignal und während der Zeilenhinlaufzeit die genannten farbträgerfrequenten Signale.

Der genannte Phasenfehler im Bezugsträger führt bei der Demodulation zu einer Verringerung der Amplitude der gewonnenen Farbsignale und damit zu einer Entsättigung der wiedergegebenen Farbe. Das ist bei geringerer Signalsättigung tragbar, führt jedoch besonders bei hoher Sättigung zu Fehlern im wiedergegebenen Bild.

Der Erfindung liegt die Aufgabe zugrunde, eine neuartige Schaltung der zuletzt beschriebenen Art zu schaffen, bei der Phasenfehler im erzeugten Bezugsträger verringert werden, und zwar unabhängig von der Zeitkonstante des Filters in der PLL-Phasenregelschaltung.

Diese Aufgabe wird durch die im Anspruch 1 beschriebene Erfindung gelöst. Vorteilhafte Weiterbildungen der Erfindung sind in den abhängigen Ansprüchen beschrieben.

Es ist auch eine Schaltung bekannt (DE-A-18 12 760), bei der die farbträgerfrequenten Ausgangssignale der Addierstufe und der Subtrahierstufe eines PAL-Decoders addiert und einer von der PLL-Schaltung des Bezugsträgeroszillators unabhängigen, zusätzlichen Phasenvergleichsstufe zugeführt sind, die andererseits mit dem Bezugsträger gespeist wird. Die Ausgangsspannung dieser zusätzlichen Phasenvergleichsstufe wirkt zusätzlich als Regelspannung auf den Bezugsträgeroszillator ein. Dabei werden aber nicht die Amplitude und die Polarität des aus dem farbträgerfrequenten Signal gewonnenen Farbsignals ausgewertet, um in Abhängigkeit von der Amplitude und der Polarität ein farbträgerfrequentes Signal oder das invertierte farbträgerfrequente Signal an den Eingang der Phasenvergleichsstufe durchzuschalten.

Bei der erfindungsgemässen Lösung ist es nicht erforderlich, die 180°-Phasensprünge in den farbträgerfrequenten Signalen zu beseitigen. Vielmehr wird die Polarität des demodulierten Farbsignals (B-Y) oder (R-Y) als Kriterium dafür ausgenutzt, ob das farbträgerfrequente Signal die Phasenlage 0° oder 180° hat. In Abhängigkeit davon wird dann das farbträgerfrequente Signal oder das invertierte farbträgerfrequente Signal der Phasenvergleichsstufe der PLL-Schaltung zugeführt. Das beruht darauf, dass der Phasenwechsel in dem farbträgerfrequenten Signal bei einer Polaritätsumkehr des aufmodulierten Farbdifferenzsignals auftritt.

Grundsätzlich können beide farbträgerfrequenten Signale für die Synchronisierung ausgenutzt werden. Bei Verwendung des der umgeschalteten Modulationsachse entsprechenden Signals muss die zeilenfrequente PAL-Umschaltung mit einem zeilenfrequenten Schalter aufgehoben und das Signal auf die gleiche Phase wie das der nichtumgeschalteten Modulationsachse entsprechende gebracht werden. Insbesondere bei Ausnutzung beider farbträgerfrequenten Signale kann eine zeitlich weitestgehend ununterbrochene Synchronisierung des Oszillators erreicht werden.

Die obigen Überlegungen beruhen auf der Annahme, dass die Farbsignale in zwei aufeinanderfolgenden Zeilen identisch sind. Bei Farbsprüngen in senkrechter Richtung trifft dies nicht mehr zu. Die genannten farbträgerfrequenten Signale haben dann nicht mehr genau die Phase der beiden Modulationsachsen. Der Bezugsträgeroszillator kann dann durch diese Signale auf eine falsche Phase synchronisiert werden. Deshalb wird gemäss einer Weiterbildung der Erfindung bei einer Phasenabweichung die Auswertung des farbträgerfrequenten Signals für die Synchronisierung absichtlich verhindert. Die Phasenabweichung kann dadurch ermittelt werden, dass ein farbträgerfrequentes Signal, z.B. FU, an der dazu senkrecht stehenden Modulationsachse, z.B. V, demoduliert wird. Das Demodulationsprodukt ist bei richtiger Phase null. Bei Phasenabweichung steigt es an und kann zur Verhinderung des Einflusses dienen.

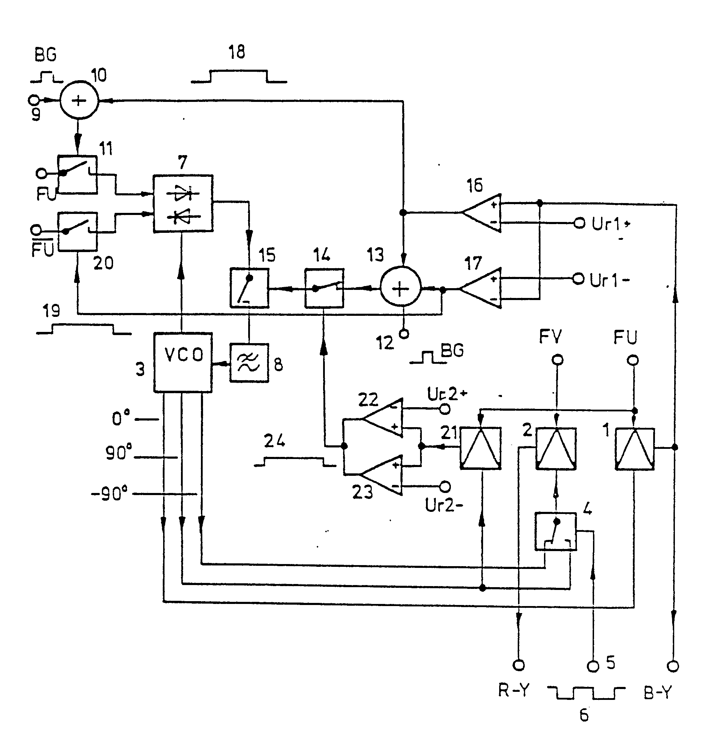

Die Erfindung wird anhand der Zeichnung an einem Ausführungsbeispiel erläutert.

In der Figur werden die beiden farbträgerfrequenten Signale FU und FV von den Ausgängen der Matrix eines PAL-Laufzeitdecoders zwei Synchrondemodulatoren 1, 2 zugeführt, die an ihren Ausgängen die videofrequenten Farbdifferenzsignale (B-Y) und (R-Y) liefern. Die Synchrondemodulatoren 1, 2 werden von dem Bezugsträgeroszillator 3 mit Bezugsträgern der Phasenlagen 0°, 90° und −90° gespeist, wobei vor dem Synchrondemodulator 2 der zeilenfrequente PAL-Schalter 4 liegt. Dieser wird von der Klemme 5 durch die halbzeilenfrequente Schaltspannung 6 betätigt. Der Bezugsträgeroszillator 3 bildet zusammen mit der Phasenvergleichsstufe 7 und dem Filter 8 eine PLL-Phasenregelschaltung. Die soweit beschriebene Schaltung ist bekannt. Im folgenden wird die Synchronisierung des Oszillators 3 näher beschrieben.

Synchronisierung durch das Farbsynchronsignal

In dem farbträgerfrequenten Signal FU ist die der nicht umgeschalteten Modulationsachse entsprechende Farbsynchronsignalkomponente mit der konstanten Phase der Achse U enthalten. Der während der Dauer des Farbsynchronsignals auftretende Auftastimpuls BG gelangt von der Klemme 9 über die Addierstufe 10 auf das Tor 11 und steuert dieses durchlässig, so dass die Farbsynchronsignalkomponente auf die Phasenvergleichsstufe 7 gelangt. Der Impuls BG gelangt ausserdem von der Klemme 12 über die Addierstufe 13 und das als durchlässig angenommene Tor 14 auf das Tor 15 und steuert dieses durchlässig. Dadurch wird erreicht, dass die während der Dauer der Farbsynchronsignalkomponente und des Impulses BG auftretende Regelspannung vom Ausgang der Phasenvergleichsstufe 7 auf das Siebglied 8 gelangt und zur Regelung des Oszillators 3 wirksam wird.

Das Farbdifferenzsignal (B-Y) wird zusätzlich einer Schwellwertschaltung mit den beiden Differenzverstärkern 16, 17 zugeführt, an die zwei Referenzspannungen Ur1+ und Ur1− angelegt sind. Wenn das Signal (B-Y) in positiver Richtung einen bestimmten, durch Ur1+ festgelegten Spannungswert überschreitet, entsteht am Ausgang des Differenzverstärkers 16 ein Impuls 18, der entsprechend der Amplitude von (B-Y) sich über die ganze Zeilenhinlaufzeit oder einen Teil davon erstreckt. Der Impuls 18 gelangt über die Addierstufe 10 zusätzlich zu dem Impuls BG auf das Tor 11 und steuert dieses durchlässig. Dadurch wird das Signal FU mit dem Tor 11 zusätzlich während der Zeilenhinlaufzeit zur Synchronisierung des Oszillators 3 auf die Phasenvergleichsstufe 7 durchgeschaltet. Dieses Signal hat dann z.B. entsprechend der positiven Polarität von (B-Y) die Phase 0° der nichtumgeschalteten Modulationsachse U, also die gleiche Phase wie die Farbsynchronsignalkomponente.

Wenn die Polarität des Signals (B-Y) negativ ist, ist die Phase des Signals FU 180° und dürfte nicht mehr zur Synchronisierung ausgenutzt werden. Bei einem negativen Signal (B-Y) oberhalb einer bestimmten Amplitude liefert der Differenzverstärker 17 den Impuls 19, der das invertierte farbträgerfrequente Signal $\overline{FU}$ mit dem Tor 20 auf einen Eingang der Phasenvergleichsstufe 7 schaltet. Da das Signal FU jetzt eine Phasenlage von 180°, also der Achse -U hat, jedoch das invertierte Signal $\overline{FU}$ durchgeschaltet wird, bekommt die Phasenvergleichsstufe 7 wiederum ein Signal mit der Phase 0° der nichtumgeschalteten Modulationsachse U. Die von den Toren 11, 20 gespeisten Eingänge der Phasenvergleichsstufe 7 sind gleichwertig und können zu einem Eingang zusammengefasst sein. Die Polarität von (B-Y) bestimmt also, ob das Signal FU oder das Signal $\overline{FU}$ zur Synchronisierung durchgeschaltet wird.

Auf ähnliche Weise kann zusätzlich mit den Signalen FV und $\overline{FV}$ verfahren werden, wenn dieses Signal vorher von der PAL-Umschaltung und von dem 90°-Versatz gegenüber dem Signal FU befreit worden ist. Der Oszillator 3 würde dann abwechselnd durch die Farbsynchronsignalkomponente aus dem Signal FU und durch die Signale FU, FU, FV und $\overline{FV}$ synchronisiert, abhängig davon, welche Amplitude diese Signale haben. Wenn die letztgenannten vier Signale null sind, kann während der Hinlaufzeit keine Synchronisierung erfolgen. Dieser Zustand bedeutet jedoch ein farbloses Bild, für das die richtige Phase des Bezugsträgers auch praktisch bedeutungslos ist.

Das Signal FU wird einem weiteren Synchrondemodulator 21 zugeführt, der andererseits den Bezugsträger mit der Phase 90° bekommt. Da das Signal FU die Phase der Achse U hat, liefert der Synchrondemodulator 21 bei richtiger Phase kein Signal. Bei Phasenabweichung des Signals FU von der Phase der Modulationsachse U, also z.B. bei Farbsprüngen von Zeile zu Zeile, entsteht am Ausgang des Synchrondemodulators 21 eine Spannung. Diese Spannung wird der Schwellwertschaltung mit den beiden Differenzverstärkern 22, 23 zugeführt, deren Schwellwerte durch angelegte Referenzspannungen Ur2+ und Ur2− festgelegt sind. Sobald die Spannung am Ausgang des Synchrondemodulators 21 die durch Ur2+ und Ur2− festgelegten Spannungswerte in positiver oder in negativer Richtung überschreitet, entsteht am Ausgang der Differenzverstärker 22, 23 der Impuls 24. Der Impuls 24 steuert das Tor 14, das bei den bisherigen Betrachtungen als durchlässig angenommen wurde, undurchlässig. Dadurch wird verhindert, dass die durch die Signale FU oder $\overline{FU}$ entstehende Regelspannung am Ausgang der Phasenvergleichsstufe 7 und das Siebglied 8 gelangt und die Regelspannung für den Oszillator 3 im Sinne einer falschen Phase des Bezugsträgers beeinflusst. Der Einfluss der Signale FU und $\overline{FU}$ auf die Synchronisierung des Oszillators 2 wird also in diesem Falle absichtlich gesperrt. Der Impuls BG von der Klemme 12 gelangt trotzdem über das Tor 14 zum Tor 15, weil das Signal FU während der Zeilenrücklaufzeit nicht vorhanden ist und somit während der Dauer des Impulses BG und damit des Farbsynchronsignals des Impuls 24 nicht auftreten kann und somit das Tor 14 während der Zeilenrücklaufzeit auf jeden Fall durchlässig bleibt. Das Tor 14 verhindert also einen Phasenfehler des Bezugsträgers vom Oszillator 3 bei Farbsprüngen in Vertikalrichtung, bei denen das Signal FU während der Zeilenhinlaufzeit eine verfälschte Phase hat und für die zusätzliche Synchronisierung nicht mehr geeignet ist.

## Patentansprüche

1. Schaltung zur Synchronisierung des Bezugsträgeroszillators (3) in einem PAL-Farbfernsehempfänger mit einer vom Farbsynchronsignal gesteuerten PLL-Phasenregelschaltung (3, 7, 8) mit einer Phasenvergleichsstufe (7), wobei der Oszillator (3) zusätzlich durch ein vom Ausgang des PAL-Laufzeitdecoders abgeleitetes farbträgerfrequentes Signal (FU) synchronisiert ist, aus dem in einem Synchrondemodulator (1) das videofrequente Farbsignal (B-Y) gewonnen wird, dadurch gekennzeichnet, dass dann, wenn das Farbsignal (B-Y) einen bestimmten Spannungswert der einen oder anderen Polarität (+ oder −) überschreitet, das farbträgerfrequente Signal (FU) bzw. das invertierte farbträgerfrequente Signal (FU) zusätzlich an einen Eingang der Phasenvergleichsstufe (7) angelegt ist.

2. Schaltung nach Anspruch 1, dadurch gekennzeichnet, dass das farbträgerfrequente Signal (FU) der nichtumgeschalteten PAL-Modulationsachse (U) entspricht.

3. Schaltung nach Anspruch 1, dadurch gekennzeichnet, dass das farbträgerfrequente Signal (FV) der umgeschalteten PAL-Modulationsachse (V) entspricht und mit einem zeilenfrequent betätigten 180°-Phasenumschalter von der 180°-PAL-Umschaltung befreit sowie mit einem Phasendreher auf die Phase des Signals der nicht umgeschalteten Modulationsachse (U) gebracht ist.

4. Schaltung nach Anspruch 1, dadurch gekennzeichnet, dass die Auswertung des farbträgerfrequenten Signals (FU) in der Phasenvergleichsstufe (7) verhindert ist, wenn die Abweichung seiner Phase von der Phase der zugehörigen Modulationsachse (U) einen bestimmten Wert übersteigt.

5. Schaltung nach Anspruch 4, dadurch gekennzeichnet, dass das farbträgerfrequente Signal (FU) in einem zusätzlichen Synchrondemodulator (21) an der um 90° in der Phase verschobenen Modulationsachse (V) demoduliert wird und die Ausgangsspannung des Demodulators (21) bei Überschreiten eines positiven oder negativen Wertes die Auswertung verhindert.

6. Schaltung nach Anspruch 4, dadurch gekennzeichnet, dass die Verhinderung der Auswertung durch eine Unterbrechung (14) des Regelspannungsweges der PLL-Schaltung vor dem Siebglied (8) erfolgt.

7. Schaltung nach Anspruch 1, dadurch gekennzeichnet, dass das Farbsynchronsignal für die PLL-Schaltung (3, 7, 8) von dem der nicht umgeschalteten Modulationsachse (U) entsprechenden Ausgang des Laufzeitdecoders abgenommen ist.

## Revendications

1. Circuit pour synchroniser l'oscillateur (3) produisant la porteuse de référence dans un récepteur de télévision en couleurs PAL, comportant un circuit PLL de régulation de phase (3, 7, 8), commandé par le signal de synchronisation couleur, et comportant un étage comparateur de phase (7), l'oscillateur (3) étant synchronisé en outre par un signal (FU), qui possède la fréquence de la porteuse couleur et est délivré par la sortie du codeur de temps de propagation PAL et à partir duquel le signal chromatique (B-Y) possédant la fréquence vidéo est obtenu dans un démodulateur synchrone (1), caractérisé en ce que, lorsque le signal chromatique (B-Y) dépasse une valeur de tension déterminée possédant l'une ou l'autre des polarités (+ ou −), le signal (FU) possédant la fréquence de la porteuse couleur ou le signal inversé (FU) possédant la fréquence de la porteuse couleur est appliqué, en supplément, à une entrée de l'étage comparateur de phase (7).

2. Circuit selon la revendication 1, caractérisé en ce que le signal (FU) possédant la fréquence de la porteuse couleur correspond à l'axe non commuté (U) de la modulation PAL.

3. Circuit selon la revendication 1, caractérisé en ce que le signal (FV) possédant la fréquence de la porteuse couleur correspond à l'axe commuté (V) de la modulation PAL et est libéré de la commutation PAL à 180°, par un commutateur de phase à 180°, actionné à la fréquence des lignes, et est amené, au moyen d'un dispositif de rotation de phase, à prendre la phase du signal de l'axe non commuté de modulation (U).

4. Circuit selon la revendication 1, caractérisé en ce que l'évaluation du signal (FU) possédant la fréquence de la porteuse couleur est empêchée dans le circuit comparateur de phase (7), lorsque l'écart entre sa phase et la phase de l'axe associé de modulation (U) dépasse une valeur déterminée.

5. Circuit selon la revendication 4, caractérisé en ce que le signal (FU) possédant la fréquence de la porteuse couleur est démodulé dans un démodulateur synchrone supplémentaire (21), sur l'axe de modulation (V), dont la phase est décalée de 90°, et la tension de sortie du démodulateur (21) empêche l'évaluation, dans le cas du dépassement d'une valeur positive ou négative.

6. Circuit selon la revendication 4, caractérisé en ce que le blocage de l'évaluation est réalisé au moyen d'une interruption (14) de la voie d'application de la tension de régulation du circuit PLL, en amont du circuit de lissage (8).

7. Circuit selon la revendication 1, caractérisé en ce que le signal de synchronisation couleur pour le circuit PLL (3, 7, 8) est prélevé sur la sortie du décodeur de temps de propagation, qui correspond à l'axe non commuté de modulation (U).

**Claims**

1. A circuit for synchronising the reference carrier oscillator (3) in a PAL colour television receiver with a PLL phase regulating circuit (3, 7, 8) which is controlled by the colour synchronous signal and has a phase comparison stage (7), in which the oscillator (3) is additionally synchronised by a colour carrier frequency signal (FU) derived from the output of the PAL delay decoder, the video frequency colour signal (B-Y) being obtained from said signal (FU) in a synchronous demodulator (1), characterised in that when the colour signal (B-Y) overshoots a certain voltage value of one or other polarity (+ or −), the colour carrier frequency signal (FU) or the inverted colour carrier frequency signal (FU) respectively is additionally applied to an input of the phase comparison stage (7).

2. A circuit according to claim 1, characterised in that the colour carrier frequency signal (FU) corresponds to the PAL modulation axis (U) which has not been switched over.

3. A circuit according to claim 1, characterised in that the colour carrier frequency signal (FV) corresponds to the PAL modulation axis (V) which has been switched over and is released by a line frequency actuated 180° phase switch of the 180° PAL switchover and is brought by a phase rotation device into phase with the signal of the modulation axis (U) which has not been switched over.

4. A circuit according to claim 1, characterised in that evaluation of the colour carrier frequency signal (FU) in the phase comparison stage (7) is prevented, when the deviation in its phase from the phase of the related modulation axis (U) exceeds a certain value.

5. A circuit according to claim 4, characterised in that the colour carrier frequency signal (FU) is demodulated in an additional synchronous demodulator (21) at the modulation axis (V) which is phase shifted by 90° and the output voltage of the demodulator (21) prevents evaluation when a positive or negative value is exceeded.

6. A circuit according to claim 4, characterised in that evaluation is prevented by an interruption (14) in the regulating voltage path of the PLL circuit in front of the filter component (8).

7. A circuit according to claim 1, characterised in that the colour synchronous signal for the PLL circuit (3, 7, 8) is derived from the output of the delay decoder which corresponds to the modulation axis (U) which is not switched over.